# EUROPÄISCHE PATENTSCHRIFT

(11) **EP 0 402 972 B1**
(45) Veröffentlichungstag und Bekanntmachung des Hinweises auf die Patenterteilung: **23.02.1994**
(21) Anmeldenummer: 90201343.2
(22) Anmeldetag: 26.05.1990
(51) Int. Cl.: F23J 15/00, B01D 46/24, B01D 39/20

(54) **Verfahren zur Vermeidung der Bildung von hochkondensierten aromatischen Kohlenwasserstoffen und Dioxinen sowie Vorrichtung zur Durchführung des Verfahrens**
Process to avoid the formation of highly condensed aromatic hydrocarbons and dioxines and apparatus for achieving this process
Procédé pour empêcher la formation des hydrocarbures aromatiques très condensés et des dioxines et dispositif pour la réalisation du procédé

(30) Priorität: 16.06.1989 DE 3919790
(43) Veröffentlichungstag der Anmeldung: 19.12.1990
(73) Patentinhaber: METALLGESELLSCHAFT Aktiengesellschaft, 60015 Frankfurt (DE)
(72) Erfinder: Weber, Ekkehard, Prof. Dr., D-4300 Essen 17 (DE); Arras, Karlheinz, Dr., D-6000 Frankfurt am Main (DE)

(56) Entgegenhaltungen:
- WO-A-88/07648
- DE-U- 8 715 130

## Beschreibung

Die Erfindung betrifft ein Verfahren zur Vermeidung der Bildung von hochkondensierten aromatischen Kohlenwasserstoffen und Dioxinen in Verbrennungsanlagen, vorzugsweise in Müllverbrennungsanlagen, bei dem die Entstaubung der Verbrennungsabgase hinter der Feuerung bei Temperaturen von 300 bis 1000°C, vorzugsweise 400 bis 900°C, erfolgt. Die Erfindung betrifft ferner eine Vorrichtung zur Durchführung des Verfahrens.

Es ist bekannt, daß sich bei Verbrennungsprozessen und insbesondere bei der Abfallverbrennung hochkondensierte aromatische Kohlenwasserstoffe sowie Dioxine bilden, die mit dem Filterstaub sowie mit dem Abgas aus der Verbrennungsanlage ausgetragen werden. Mit dem Sammelbegriff "hochkondensierte aromatische Kohlenwasserstoffe" werden die mehrkernigen Aromaten bezeichnet, die auch eine oder mehrere OH-Gruppen aufweisen können. Mit dem Sammelbegriff "Dioxine" werden die polychlorierten Dibenzo-P-Dioxine und die polychlorierten Dibenzofurane bezeichnet. Zu den Dioxinen gehören insgesamt 210 Isomere, von denen einige außerordentlich giftig sind. Die hochkondensierten aromatischen Kohlenwasserstoffe sind ebenfalls gesundheitsschädlich, da sie als krebserregende Substanzen gelten. Wegen der Giftigkeit der hochkondensierten aromatischen Kohlenwasserstoffe und der Dioxine ist es erforderlich, diese Verbindungen aus dem Filterstaub bzw. dem Abgas zu entfernen oder die Bildung dieser Verbindungen in der Verbrennungsanlage zu vermeiden.

Es ist bekannt, daß in Verbrennungsanlagen bei 300 bis 400°C - also während der Abkühlung der Abgase - durch Rekombination organischer Radikale in Gegenwart von Sauerstoff hochkondensierte aromatische Kohlenwasserstoffe in geringer Menge gebildet werden, die auch OH-Gruppen enthalten können. Es ist ferner bekannt, daß in Verbrennungsanlagen Dioxine unterhalb 300°C gebildet werden, was darauf zurückgeführt wird, daß sich bei höheren Verbrennungstemperaturen aus den vorhandenen Chlorverbindungen in Gegenwart von Sauerstoff Chlor bildet, das dann im Verlauf der Abkühlung der Abgase in Gegenwart organischer Verbindungen oder Kohlenstoff Dioxine bildet. Diese Reaktion wird zusätzlich durch die in den Flugstäuben vorhandenen Schwermetallverbindungen (Oxide) katalysiert. Daher wurde bereits vorgeschlagen, die Flugasche aus dem Abgasstrom von Verbrennungsanlagen bei Temperaturen oberhalb 300°C abzutrennen, da bekannt ist, daß hochkondensierte aromatische Kohlenwasserstoffe sowie Dioxine oberhalb 600°C thermisch instabil sind.

Aus der DE-OS 3 644 381 ist ein Verfahren zur Minimierung von Schadstoff-Emissionen aus Verbrennungsanlagen bekannt, bei dem die Entstaubung der Rauchgase im Temperaturbereich um oder oberhalb 300°C unmittelbar hinter der Feuerung vor oder im ersten Teilbereich des Wärmeaustauschers erfolgt. Die Entstaubung wird in einer Trenndüse (Fliehkraft-Entstauber) aus keramischem Material oder in einem Schüttschichtfilter durchgeführt. Mit dem in der DE-OS 3 644 381 vorgeschlagenen Verfahren soll die katalytische Bildung von Dioxinen durch die Flugstaub-Partikel im Rauchgas während der Abkühlphase verhindert werden.

In der WO-A-88/07648 wird eine Müllverbrennungsanlage beschrieben, die aus einem Verbrennungsofen, einem Ofenauslaß, einem Rauchgaskanal und einem Abgasreinigungssystem besteht, wobei zwischen dem Abgaskanal und dem Abgasreinigungssystem ein Wärmeaustauscher angeordnet ist. Im Wärmeaustauscher wird das Abgas abgekühlt. Die Abscheidung des Staubs erfolgt in einem Zyklon sowie in einem Filter und einem Elektrofilter. Im Rauchgaskanal kann dabei ein Keramikfilter angeordnet werden, welches bei ca. 1000°C arbeitet. Das Keramikfilter besteht dabei aus gasdurchlässigen Filterkerzen mit einer Wandstärke von 20 mm, wobei als keramischer Werkstoff Siliziumcarbid verwendet wird. Es können ferner auch andere Keramikfilter verwendet werden, wobei allerdings sicherzustellen ist, daß die Abgase eine ausreichend lange Verweilzeit im Filter haben, so daß die Zerstörung der giftigen organischen Verbindungen im Filter erfolgen kann. Das Abreinigen der keramischen Filterelemente kann durch Pulsen erfolgen.

Es hat sich gezeigt, daß weder ein Schüttschichtfilter, noch ein Fliekraft-Entstauber dazu in der Lage ist, das Verbrennungsabgas soweit zu entstauben, daß die Bildung von hochkondensierten aromatischen Kohlenwasserstoffen und Dioxinen immer ausgeschlossen ist. Untersuchungen haben nämlich gezeigt, daß zumindest zeitweise im Reingas von Verbrennungsanlagen, die mit einem Schüttschichtfilter und/oder einem Fliehkraft-Entstauber entstaubt werden, Staubgehalte >5 mg/Nm³ vorliegen und daß bereits diese geringen Staubgehalte ausreichen, um die Bildung von hochkondensierten aromatischen Kohlenwasserstoffen und insbesondere Dioxinen zu katalysieren.

Der Erfindung liegt daher die Aufgabe zugrunde, ein Verfahren zur Vermeidung der Bildung von hochkondensierten aromatischen Kohlenwasserstoffen und Dioxinen in Verbrennungsanlagen zu schaffen, das völlig betriebssicher arbeitet und die Entstehung der vorgenannten Stoffe während der Abkühlphase der Abgase zuverlässig verhindert, so daß sie in den Filterstäuben und den Abgasen nicht mehr nachweisbar sind. Der Erfindung liegt ferner die Aufgabe zugrunde, eine Vorrichtung zur Durchführung des Verfahrens zu schaffen.

Die der Erfindung zugrundeliegende Aufgabe wird dadurch gelöst, daß zur Entstaubung der Verbrennungsabgase ein aus SiO₂, Al₂O₃ und/oder ZrO₂ sowie einem anorganischen Bindemittel bestehendes keramisches Filterelement mit einem Porenvolumen von 50 bis 90 % verwendet wird. Das keramische Filterelement kann als Sinterkörper, Gewebe oder Filz ausgebildet sein. Der Einsatz derartiger Filterelemente garantiert im Reingas mindestens einen Reststaubgehalt von <2 mg/Nm³. Diese Staubmenge reicht mit Sicherheit nicht mehr aus, um bei der Abkühlung des Reingases die Bildung hochkondensierter aromatischer Kohlenwasserstoffe und Dioxine zu katalysieren. Daher konnten in den Stäuben, die entsprechend dem erfindungsgemäßen Verfahren abgetrennt wurden, die vorgenannten Verbindungen nicht mehr nachgewiesen werden, und auch das Reingas war frei von diesen Verbindungen.

Das erfindungsgemäße Verfahren kann besonders erfolgreich durchgeführt werden, wenn das Filterelement eine Dicke von 10 bis 30 mm hat, einen Druckverlust von 500 bis 1000 mbar aufweist und aus Fasern besteht, die mit dem anorganischen Bindemittel zu einem Filz verdichtet sind. Derartige Filterelemente ermöglichen einen Reststaubgehalt im Reingas von <1 mg/Nm³.

In weiterer Ausgestaltung der Erfindung ist vorgesehen, daß das Filterelement aus 30 bis 70 Gew.% Al₂O₃, 15 bis 50 Gew.% SiO₂ und 1 bis 10 Gew.% anorganischem Bindemittel besteht. Als organisches Bindemittel werden bevorzugt Alkalisilikate, Erdalkalisilikate, Alkaliphosphate oder Erdalkaliphosphate verwendet. Derartig zusammengesetzte Filterelemente arbeiten bei 600 bis 1000°C besonders zuverlässig.

Nach der Erfindung ist ferner vorgesehen, daß die Abreinigung des Filterelements durch Rückspülung und/oder durch Pulsen mit einem Gas erfolgt, wobei die Temperatur am Filterelement 300 bis 900° beträgt. Bei der Rückspülung wird eine Gruppe von Filterelementen aus dem Filtrationsprozeß ausgekoppelt und mit einem Gasstrom rückgespült, so daß sich der abfiltrierte Staub vom Filterelement ablöst. Beim Pulsen wird mindestens ein Filterelement während des Filtrationsprozesses mit einem Gasimpuls beaufschlagt, der umgekehrt zur Filtrationsrichtung wirkt und den abfiltrierten Staub vom Filterelement entfernt.

Nach der Erfindung ist es besonders vorteilhaft, wenn der abgereinigte Staub in einem geschlossenen Gefäß unter Luftabschluß abgekühlt wird. Durch die vorgenannten Maßnahmen wird sichergestellt, daß auch während des Rückspülvorgangs und des Staubaustrags keine hochkondensierten aromatischen Kohlenwasserstoffe und keine Dioxine gebildet werden.

In weiterer Ausgestaltung der Erfindung ist vorgesehen, daß zwischen Feuerung und Filterelement ein Zyklon angeordnet ist, der mit keramischem Material ausgekleidet sein kann. Diese Anordnung hat sich dann als besonders vorteilhaft erwiesen, wenn große Staubmengen aus den Verbrennungsabgasen abgetrennt werden müssen, denn durch den Zyklon wird eine hinreichend gute Entstaubungsleistung erzielt, wodurch das Filterelement entlastet und seine Abreinigungsintervalle verlängert werden.

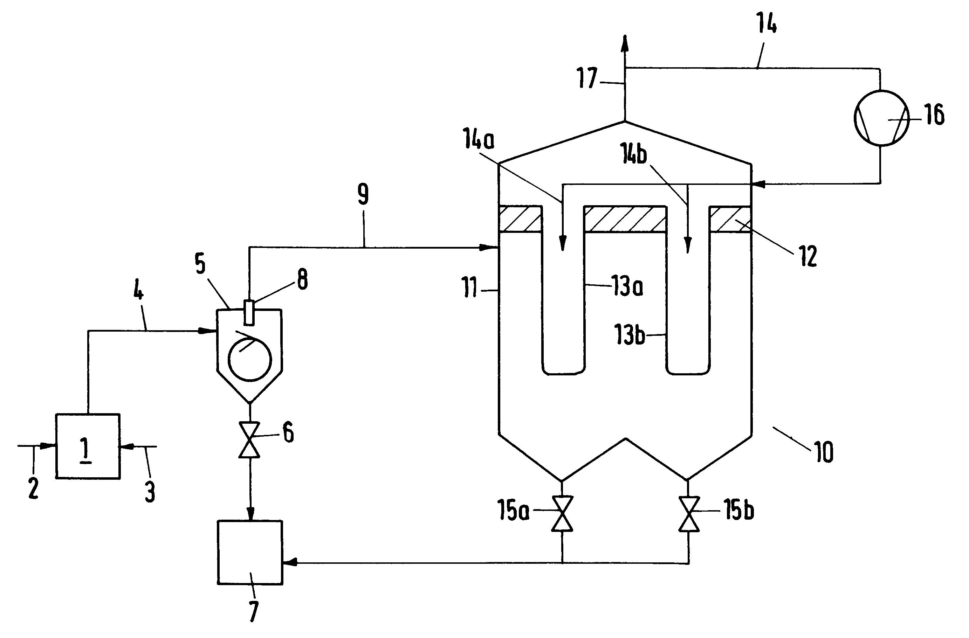

Der Gegenstand der Erfindung wird nachfolgend anhand der Zeichnung näher erläutert, in der die Vorrichtung zur Durchführung des erfindungsgemäßen Verfahrens schematisch dargestellt ist.

Die der Erfindung zugrundeliegende Aufgabe wird ferner durch die Schaffung einer Vorrichtung gelöst, die aus einem Gehäuse und mehreren, selbsttragenden, in einer Platte befestigten Filterelementen besteht, wobei die Filterelemente die Form einer Filterkerze haben, aus SiO₂, Al₂O₃ und/oder ZrO₂ sowie einem anorganischen Bindemittel zusammengesetzt sind und ein Porenvolumen von 50 bis 90 % aufweisen. Mindestens eine der mit Filterkerzen bestückten Platten ist in einem Gehäuse angeordnet, wobei die Filterkerzen im staubhaltigen Abgasstrom so positioniert sind, daß sie vom Gas von außen nach innen durchströmt werden. Der Einsatz mehrerer Filterkerzen hat den Vorteil, daß sie jeweils gruppenweise durch Rückspühlung und/oder Pulsen abgereinigt werden können, ohne daß die Entstaubung mit den anderen Filterkerzen unterbrochen werden muß. Die Platten, in denen die Filterkerzen angeordnet sind, bestehen entweder aus Stahl oder aus einem keramischen Material. Die gegebenenfalls vorhandenen unterschiedlichen thermischen Ausdehnungskoeffizienten der einzelnen Materialien werden durch entsprechende Dichtungen ausgeglichen. Reingasseite und Rohgasseite können mit der erfindungsgemäßen Vorrichtung zuverlässig voneinander getrennt werden.

Im Feuerungsraum 1 wird der über eine Eintragsvorrichtung 2 zugeführte Abfall mit der über die Leitung 3 zugeführten Luft bei 850 bis 1000°C verbrannt. Die heißen, staubhaltigen Verbrennungsabgase gelangen über den Rauchgaskanal 4 in einen als Fliehkraftentstauber wirkenden Zyklon 5, der mit einem feuerfesten keramischen Material ausgekleidet ist. Der im Zyklon 5 abgeschiedene Staub wird über die Leitung 6 in den Staubbunker 7 ausgetragen, wo die Abkühlung des Staubs unter Luftabschluß erfolgt. Das vorentstaubte Abgas verläßt den Zyklon 5 über das Tauchrohr 8 sowie die Abgasleitung 9 und gelangt in das Entstaubungsfilter 10.

Das Entstaubungsfilter 10 besteht aus dem wärmeisolierten Gehäuse 11, in dem die aus einem keramischen Material oder aus Stahl bestehende Platte 12 angeordnet ist, welche die Rohgasseite von der Reingasseite trennt. In der Platte 12 sind mehrere Filterkerzen 13a, 13b gasdicht eingepaßt. Die Filterkerzen sind selbsttragend und bestehen aus mit einem anorganischen Bindemittel zu einem Filz verdichteten keramischen Fasern. Die Filterkerzen werden auch im Langzeitbetrieb durch Temperaturen von 600 bis 1000°C nicht geschädigt. Anstelle eines aus keramischen Fasern gebildeten Filzes können die Filterkerzen auch aus gesintertem keramischen Material bestehen.

Das vorentstaubte Verbrennungsabgas tritt mit einer Temperatur von 850 bis 950°C von außen nach innen durch die Filterkerzen 13a, 13b hindurch, wobei der Staub auf der Außenseite der Filterkerzen zurückgehalten wird. In regelmäßigen Abständen wird jeweils mindestens eine Filterkerze bzw. eine Gruppe von Filterkerzen durch Rückspülung oder durch Pulsen abgereinigt, wobei das zur Abreinigung verwendete Gas über die Leitungen 14a, 14b im Innern der Filterkerze aufgegeben wird und den an der Außenseite der Filterkerze befindlichen Staubkuchen abwirft, der über den trichterförmigen Boden des Gehäuses 11 und die Leitungen 15a, 15b in den Staubbunker 7 gelangt, wo er unter Luftabschluß abgekühlt wird. Zur Abreinigung der Filterkerzen 13a, 13b wird vorteilhaft entstaubtes Abgas verwendet, das dem Reingasstrom entnommen und durch dem Kompressor 16 auf den erforderlichen Betriebsdruck gebracht wird. Das entstaubte Verbrennungsabgas hat einen Staubgehalt <1 mg/Nm³, der ständig eingehalten und auch kurzzeitig nicht überschritten wird. Das heiße entstaubte Verbrennungsabgas gelangt über den Reingaskanal 17 in einen Wärmeaustauscher (Dampferzeuger), der in der Zeichnung nicht dargestellt ist.

Es ist möglich, einen Teil der im Verbrennungsabgas enthaltenen Wärme vor dem Entstaubungsfilter 10 abzuführen, so daß die Entstaubungstemperatur z.B. bei 600 bis 700°C liegt. Beispielsweise können im Zyklon 5 Wärmeaustauscherrohre angeordnet werden.

Weder in dem im Staubbunker 7 anfallenden Staub noch in dem in die Atmosphäre abgegebenen Reingas konnten während eines Zeitraums von 6 Monaten hochkondensierte aromatische Kohlenwasserstoffe und Dioxine nachgewiesen werden. Die Filterelemente 13a, 13b hatten ihre Leistung während dieser Zeit nicht verändert.

## Patentansprüche

1. Verfahren zur Vermeidung der Bildung von hochkondensierten aromatischen Kohlenwasserstoffen und Dioxinen in Verbrennungsanlagen, vorzugsweise in Müllverbrennungsanlagen, bei dem die Entstaubung der Verbrennungsabgase hinter der Feuerung bei Temperaturen von 300 bis 1000°C, vorzugsweise 400 bis 900°C, erfolgt, dadurch gekennzeichnet, daß zur Entstaubung ein aus SiO₂, Al₂O₃ und/oder ZrO₂ sowie einem anorganischen Bindemittel bestehendes keramisches Filterelement mit einem Porenvolumen von 50 bis 90 % verwendet wird.

2. Verfahren nach Anspruch 1, dadurch gekennzeichnet, daß das Filterelement eine Dicke von 10 bis 30 mm hat, einen Druckverlust von 500 bis 1000 mbar aufweist und aus Fasern besteht, die mit dem anorganischen Bindemittel zu einem Filz verdichtet sind.

3. Verfahren nach den Ansprüchen 1 bis 2, dadurch gekennzeichnet, daß das Filterelement aus 30 bis 70 Gew.% Al₂O₃, 15 bis 50 Gew.% SiO₂ und 1 bis 10 Gew.% anorganischem Bindemittel besteht.

4. Verfahren nach den Ansprüchen 1 bis 3, dadurch gekennzeichnet, daß die Abreinigung des Filterelements durch Rückspülung und/oder durch Pulsen mit einem Gas erfolgt, wobei die Temperatur am Filterelement 300 bis 900°C beträgt.

5. Verfahren nach Anspruch 4, dadurch gekennzeichnet, daß der abgereinigte Staub in einem geschlossenen Gefäß unter Luftabschluß abgekühlt wird.

6. Vorrichtung zur Durchführung des Verfahrens nach den Ansprüchen 1 bis 5, dadurch gekennzeichnet, daß sie aus einem Gehäuse (11) und mehreren, selbsttragenden, in einer Platte (12) befestigten Filterelementen besteht, wobei die Filterelemente die Form einer Filterkerze haben, aus SiO₂, Al₂O₃ und/oder ZrO₂ sowie einem anorganischen Bindemittel zusammengesetzt sind und ein Porenvolumen von 50 bis 90 % aufweisen.

7. Vorrichtung nach Anspruch 6, dadurch gekennzeichnet, daß zwischen Feuerung und Filterelement ein Zyklon (5) angeordnet ist.

## Claims

1. A process for avoiding the formation of highly-condensed aromatic hydrocarbons and dioxins in combustion plants, preferably in refuse incineration plants, in which the dust removal from the combustion waste gases takes place after the furnace at temperatures of 300 to 1000°C, preferably 400 to 900°C, characterised in that a ceramic filter element made of SiO₂, Al₂O₃ and/or ZrO₂ and also an inorganic binder and having a pore volume of 50 to 90% is used for dust removal.

2. A process according to Claim 1, characterised in that the filter element has a thickness of 10 to 30 mm and a pressure drop of 500 to 1000 mbar, and is made of fibres which are compacted with the inorganic binder to form a felt.

3. A process according to Claims 1 to 2, characterised in that the filter element consists of 30 to 70% by weight Al₂O₃, 15 to 50% by weight SiO₂ and 1 to 10% by weight inorganic binder.

4. A process according to Claims 1 to 3, characterised in that the cleaning of the filter element takes place by backwashing and/or by pulsing with a gas, the temperature at the filter element being 300 to 900°C.

5. A process according to Claim 4, characterised in that the dust which has been cleaned off is cooled in a closed vessel with air excluded.

6. An apparatus for performing the process according to Claims 1 to 5, characterised in that it consists of a housing (11) and a plurality of self-supporting filter elements which are secured in a plate (12), the filter elements being in the form of a filter cartridge, being composed of SiO₂, Al₂O₃ and/or ZrO₂ and an inorganic binder and having a pore volume of 50 to 90%.

7. An apparatus according to Claim 6, characterised in that a cyclone (5) is located between the furnace and filter element.

## Revendications

1. Procédé pour empêcher des hydrocarbures aromatiques très condensés et des dioxines de se former dans des installations d'incinération, de préférence dans des installations d'incinération d'ordures, qui consiste à effectuer le dépoussiérage des effluents gazeux de combustion, en aval du foyer, à des températures de 300 à 1000°C, de préférence de 400 à 900°C, caractérisé en ce qu'il consiste à utiliser pour le dépoussiérage un élément filtrant céramique, constitué de SiO₂, d'Al₂O₃ et/ou de ZrO₂ ainsi que d'un liant minéral et ayant un volume de pores de 50 à 90 %.

2. Procédé suivant la revendication 1, caractérisé en ce que l'élément filtrant a une épaisseur de 10 à 30 mm, une perte de charge de 500 à 1000 mbar et est en fibres, qui sont comprimées avec le liant minéral en un feutre.

3. Procédé suivant la revendication 1 ou 2, caractérisé en ce que l'élément filtrant est constitué de 30 à 70 % en poids d'Al₂O₃, de 15 à 50 % en poids de CO₂ et de 1 à 10 % en poids de liant minéral.

4. Procédé suivant l'une des revendications 1 à 3, caractérisé en ce qu'il consiste à effectuer le nettoyage de l'élément filtrant par lavage en retour et/ou par envoi pulsé d'un gaz, la température de l'élément filtrant étant de 300 à 900°C.

5. Procédé suivant la revendication 4, caractérisé en ce qu'il consiste à refroidir la poussière enlevée dans une enceinte fermée à l'abri de l'air.

6. Installation pour la mise en oeuvre du procédé suivant l'une des revendications 1 à 5, caractérisée en ce qu'elle est constituée d'une enveloppe (11) et de plusieurs éléments filtrants auto-porteurs et fixés dans une plaque (12), les éléments filtrants ayant la forme d'une bougie de filtre, étant composés de SiO₂, d'Al₂O₃ et/ou de ZrO₂ ainsi que d'un liant organique et ayant un volume de pores de 50 à 90 %.

7. Installation selon la revendication 6, caractérisée en ce qu'un cyclone (5) est interposé entre le foyer et l'élément filtrant.
